# EUROPEAN PATENT SPECIFICATION

(11) **EP 3 842 124 B1**
(45) Date of publication and mention of the grant of the patent: **01.01.2025**
(21) Application number: 20210303.2
(22) Date of filing: 27.11.2020
(51) Int. Cl.: B01D 53/26, B01D 53/62, B01D 53/96, F23L 7/00, C01B 3/04, C25B 1/04, C25B 1/22

(54) **AN AIR PURIFIER COMPRISING A COMBUSTION CHAMBER**
LUFTREINIGER MIT EINER BRENNKAMMER
PURIFICATEUR D'AIR COMPRENANT UNE CHAMBRE DE COMBUSTION

(30) Priority: 24.12.2019 TR 201921276
(43) Date of publication of application: 30.06.2021
(73) Proprietor: Arçelik Anonim Sirketi, 34445 Istanbul (TR)
(72) Inventor: SARICIFTCI, Niyazi Serdar, 34445 Istanbul (TR); YESILCUBUK, Alper, 34445 Istanbul (TR); ER, Dilan, 34445 Istanbul (TR); YAVUZ, Pinar, 34445 Istanbul (TR); YALCIN, Tugba, 34445 Istanbul (TR)

(56) References cited:
- EP-A1- 2 301 588
- EP-A1- 3 524 337
- WO-A1-2016/075148
- CN-A- 105 617 842
- DE-A1- 102015 201 751
- US-A1- 2012 067 304

## Description

The present invention relates to an air purifier which purifies the air in an indoor environment in a building by maintaining the humidity balance in the environment.

Today, the need for ventilation and the need for fresh air becomes more important in environments such as homes and offices especially in high-rise buildings. Plants can be a temporary solution for daytime but when the sunlight disappears, plants also start to produce carbon dioxide like human beings and the air quality of the environment decreases. Especially in high-rise buildings, it is not always possible to continuously keep the windows open and ventilate the environment. The continuously rising carbon dioxide density in the air adversely affects human health. The amount of oxygen in the environment directly affects the metabolic rate of people and the lack thereof creates weakness and fatigue in humans. Ensuring that the amount of oxygen in the interior environment does not fall below a certain level while reducing the amount of carbon dioxide generated in the environment makes the human metabolism much more vivid and vigorous.

Today, devices wherein the air is purified by means of processes such as electrodialysis and the oxygen density in the environment is increased by means of humidity. However, in such devices, as the oxygen density in the air increases during the processes performed to increase the oxygen density, hydrogen gas which is harmful for humans is also released. The hydrogen gas can cause deflagration when the density in the air by volume reaches 4% and explosions as the density reaches 7%. Furthermore, the devices wherein the humidity in the environment is used to increase the oxygen level cause the air in the interior environment to be dryer than normal and thus, decrease the air quality.

Turkish patent application no. TR201921330A discloses an air purifier comprising a body, an air inlet opening, a fan for directing the air through the air inlet opening into the body; and an air outlet opening for releasing the purified air out of the body.

Chinese patent no. CN105617842B discloses a device for separation and purification of carbon dioxide, comprising a water electrolysis system, a carbon dioxide absorption device, and a gas-liquid collection system.

European patent application no. EP3524337A1 discloses an electrolyzer and electrolytical process for recovery of CO2 from air and hydrogen generation. International patent application no. WO2016075148A1 discloses a gas capture apparatus and method for capturing a target gas such as CO2 from a gas flow. European patent application no. EP2301588A1 discloses an electrical equipment having air cleaning function, comprising an air inlet, a gas-liquid contact portion, a water collecting portion, and an air outlet.

United States patent application no. US2012067304A1 discloses a method for reducing engine system fuel requirement wherein engine waste energy is recovered and converted into usable energy.

The aim of the present invention is the realization of an air purifier which balances the humidity in the environment and also, the waste hydrogen gas is removed.

The present invention is an air purifier according to claim 1.

The air purifier of the present invention comprises an air inlet opening through which the air is sucked in, a CO₂ absorbing unit wherein the carbon dioxide is absorbed from the air having high carbon dioxide density, and an air outlet opening through which the air which is cleansed of CO₂ is sent back to the environment wherein the air purification is performed.

The air purifier of the present invention comprises an acid dosing unit and a base dosing unit.

The air purifier of the present invention comprises a control unit which controls the operation of the device, and which controls the delivery of acid and base from the acid dosing unit and the base dosing unit to the CO₂ absorbing unit in the correct time and order.

The air purifier of the present invention further comprises a condenser and a water electrolyzer. The water electrolyzer comprises an anode receptacle and a cathode receptacle. Oxygen is released in the anode receptacle and hydrogen is released in the cathode receptacle.

The air purifier of the present invention further comprises an electrodialysis unit, and the salt formed in the CO₂ absorbing unit is transferred to the electodialysis unit to form acid and base. During the processes performed in the electrodialysis unit, a small amount of hydrogen gas is released.

The air purifier of the present invention comprises a combustion chamber. The hydrogen gas which is released as a result of the processes performed in the air purifier is burned and converted to hot water vapor.

The hot water vapor created in the combustion chamber is sent to the condenser and the water which condenses therein is converted to cold water vapor by being sent to the piezoelectric module connected to the combustion chamber and water vapor is released to the environment. The hot water vapor is not preferred since it disturbs the ambient temperature balance and affects human health adversely.

The model embodiments which relate to the air purifier comprising the combustion chamber realized in order to attain the aim of the present invention are illustrated in the attached figures, where:

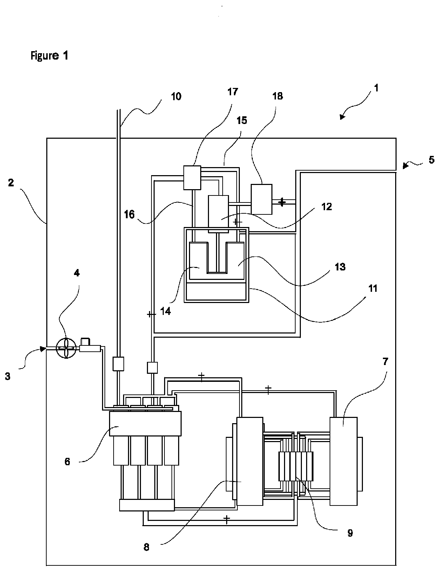

**Figure 1** - is the schematic view of the air purifier in an embodiment of the present invention.

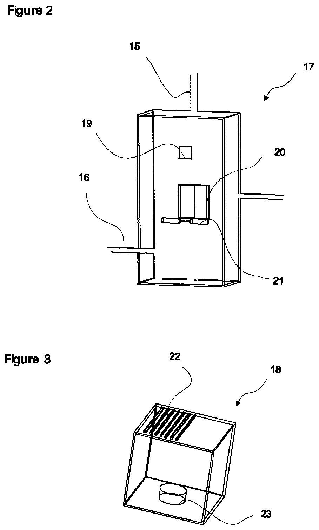

**Figure 2** - is the schematic view of the combustion chamber in the air purifier in an embodiment of the present invention.
**Figure 3** - is the schematic view of the piezoelectric module in the air purifier in an embodiment of the present invention.

The elements illustrated in the figures are numbered as follows:
1. Air purifier
2. Body
3. Air inlet opening
4. Fan
5. Air outlet opening
6. CO₂ absorbing unit
7. Acid dosing unit
8. Base dosing unit
9. Electrodialysis unit
10. CO₂ tube
11. Water electrolyzer
12. Condenser
13. Anode receptacle
14. Cathode receptacle
15. O₂ supply line
16. H₂ supply line
17. Combustion chamber
18. Piezoelectric module
19. Sensor
20. Thermoelectric module
21. Spark generator
22. Opening
23. Piezoelectric member

The air purifier (1) for purifying air in an environment comprises a body (2); an air inlet opening (3) provided on the body (2) for receiving air from the environment; a fan (4) which enables the received air to be directed through the air inlet opening (3) into the body (2); an air outlet opening (2) which enables the air purified in the body (2) to be released out of the body (2); a CO₂ absorbing unit (6) into which the received air is sucked; a base dosing unit (8) and an acid dosing unit (7) which are connected to the CO₂ absorbing unit (6) and which supply respectively a base solution and an acid solution into the CO₂ absorbing unit (6); a CO₂ tube (10) enabling the CO₂ retained in the CO₂ absorbing unit (6) to be discharged out of the environment; an electrodialysis unit (9) wherein salt created in the CO₂ absorbing unit (6) is delivered to and resolved back to acid and base, and hydrogen gas is released; a condenser (12) which condenses the humidity in the environment into water; and a water electrolysis unit (11) connected to the condenser (12) such that condensed water is received from the condenser (12) by the electrolysis unit (11), wherein the water received from the condenser (12) is electrolyzed, the electrolysis unit (11) comprising an anode receptacle (13) where O₂ is released and a cathode receptacle (14) where H₂ is released.

The air purifier (1) of the present invention comprises a combustion chamber (17) which is connected to the water electrolysis unit (11) and the electrodialysis unit (9) to receive hydrogen gas from the water electrolysis unit (11) and the electrodialysis unit (9), and wherein the hydrogen generated during the water electrolysis and electrodialysis processes is combusted. Thus, the hydrogen gas released in the body is enabled to be combusted producing water and rendered harmless.

In an embodiment of the present invention, the air purifier (1) comprises the combustion chamber (17) having an O₂ supply line (15) through which the oxygen received from the anode receptacle (13) is transferred to the combustion chamber (17), a H₂ supply line through which the hydrogen received from the cathode receptacle (14) and the electrodialysis unit (9) is transferred to the combustion chamber (17), and a spark generator (21).

In an embodiment of the present invention, the air purifier (1) comprises a piezoelectric module (18) having a piezoelectric member (23) which enables the water generated in the combustion to be converted to cold water vapor and at least one opening (22) which enable the cold water vapor to be released to the environment. The piezoelectric member (23) is a material such as lead, zirconade titanate (PZT), quartz and barium titanate. The hot water vapor produced in the combustion chamber (17) is sent to the condenser (12). The hot water which changes into liquid phase is transfered to the piezoelectric module (18) and converted to water vapor and transferred to the environment wherein the air is purified, increasing the humidity in the environment.

In an embodiment of the present invention, the air purifier (1) comprises a thermoelectric module (20) which generates electrical energy by means of the hot water vapor created in the combustion chamber (17). The thermoelectric module (20) is disposed into the combustion chamber (17). When the hot water vapor which rises in the combustion chamber (17) reaches the thermoelectric module (20) with the side facing the combustion chamber (17) being hot and the other side being cold, electrical energy is generated by means of the temperature difference. The electrical energy generated can be used to operate the air purifier (1).

In an embodiment of the present invention, the air purifier (1) comprises the combustion chamber (17) having a sensor which enables the hydrogen level to be detected.

In an embodiment of the present invention, the air purifier (1) of the present invention can be placed into an air conditioner. The air conditioner comprises the air purifier (1).

## Claims

1. An air purifier (1) for purifying air in an environment **comprising** a body (2); an air inlet opening (3) provided on the body (2) for receiving air from the environment; a fan (4) which enables the received air to be directed through the air inlet opening (3) into the body (2); an air outlet opening (2) which enables the air purified in the body (2) to be released out of the body (2); a CO₂ absorbing unit (6) into which the received air is sucked; a base dosing unit (8) and an acid dosing unit (7), both being connected to the CO₂ absorbing unit (6) and which supply respectively a base solution and an acid solution into the CO₂ absorbing unit (6); a CO₂ tube (10) enabling the CO₂ retained in the CO₂ absorbing unit (6) to be discharged out of the environment; an electrodialysis unit (9) to which salt created in the CO₂ absorbing unit (6) is delivered and resolved back to form acid and base, and hydrogen gas is released; a condenser (12) which condenses the humidity in the environment into water; and a water electrolysis unit (11) connected to the condenser (12) such that condensed water is received from the condenser (12) by the electrolysis unit (11), wherein the water received from the condenser (12) is electrolyzed, the electrolysis unit (11) comprising an anode receptacle (13) where O₂ is released and a cathode receptacle (14) where H₂ is released, **characterized by** a combustion chamber (17) which is connected to the water electrolysis unit (11) and the electrodialysis unit (9) to receive hydrogen gas from the water electrolysis unit (11) and the electrodialysis unit (9), and wherein the hydrogen generated during the water electrolysis and electrodialysis processes is combusted.

2. An air purifier (1) as in Claim 1, **characterized by** the combustion chamber (17) having an O₂ supply line (15) through which the oxygen received from the anode receptacle (13) is transferred to the combustion chamber (17), a H₂ supply line (16) through which the hydrogen received from the cathode receptacle (14) and the electrodialysis unit (9) is transferred to the combustion chamber (17), and a spark generator (21).

3. An air purifier (1) as in Claim 1 or 2, **characterized by** a piezoelectric module (18) having a piezoelectric member (23) which enables the water generated in the combustion to be converted to cold water vapor and at least one opening (22) which enable the cold water vapor to be released to the environment.

4. An air purifier (1) as in any one of the above claims, **characterized by** a thermoelectric module (20) which generates electrical energy by means of the hot water vapor created in the combustion chamber (17).

5. An air purifier (1) as in any one of the above claims, **characterized by** the combustion chamber (17) having a sensor (19) which detects the hydrogen level.

6. An air conditioner comprising an air purifier (1) as in any one of the above claims.

## Patentansprüche

1. Ein Luftreiniger (1) zum Reinigen von Luft in einer Umgebung, **umfasst** einen Körper (2); eine Lufteinlassöffnung (3), die an dem Körper (2) vorgesehen ist, um Luft aus der Umgebung aufzunehmen; ein Gebläse (4), das es ermöglicht, die aufgenommene Luft durch die Lufteinlassöffnung (3) in den Körper (2) zu leiten; eine Luftauslassöffnung (2), die es ermöglicht, die in dem Körper (2) gereinigte Luft aus dem Körper (2) herauszulassen; eine CO2-Absorptionseinheit (6), in die die aufgenommene Luft gesaugt wird; eine Basendosiereinheit (8) und eine Säuredosiereinheit (7), die beide mit der CO2-Absorptionseinheit (6) verbunden sind und die eine Basenlösung bzw. eine Säurelösung in die CO2-Absorptionseinheit (6) einspeisen; eine CO2-Röhre (10), die es ermöglicht, das in der CO2-Absorptionseinheit (6) zurückgehaltene CO2 aus der Umgebung abzuleiten; eine Elektrodialyseeinheit (9), der das in der CO2-Absorptionseinheit (6) erzeugte Salz zugeführt und in Säure und Base zurückgespalten wird, wobei Wasserstoffgas freigesetzt wird; einen Kondensator (12), der die Feuchtigkeit in der Umgebung zu Wasser kondensiert; und eine Wasserelektrolyseeinheit (11), die mit dem Kondensator (12) verbunden ist, so dass kondensiertes Wasser von dem Kondensator (12) durch die Elektrolyseeinheit (11) empfangen wird, wobei das von dem Kondensator (12) empfangene Wasser elektrolysiert wird, wobei die Elektrolyseeinheit (11) einen Anodenbehälter (13), wo O2 freigesetzt wird, und einen Kathodenbehälter (14), wo H2 freigesetzt wird, umfasst, **gekennzeichnet ist er dadurch,** dass er mit der Wasserelektrolyseeinheit (11) und der Elektrodialyseeinheit (9) verbunden ist, um Wasserstoffgas von der Wasserelektrolyseeinheit (11) und der Elektrodialyseeinheit (9) aufzunehmen, und wobei der während der Wasserelektrolyse- und Elektrodialyseprozesse erzeugte Wasserstoff verbrannt wird.

2. Ein Luftreiniger (1), wie in Anspruch 1 aufgeführt, **ist dadurch gekennzeichnet, dass** die Verbrennungskammer (17) eine 02-Zufuhrleitung (15), durch die der von der Anodenaufnahme (13) empfangene Sauerstoff in die Verbrennungskammer (17) übertragen wird, eine H2-Zufuhrleitung (16), durch die der von der Kathodenaufnahme (14) und der Elektrodialyseeinheit (9) empfangene Wasserstoff in die Verbrennungskammer (17) übertragen wird, und einen Funkengenerator (21) aufweist.

3. Ein Luftreiniger (1), wie in Anspruch 1 oder 2 aufgeführt, **ist dadurch gekennzeichnet, dass** ein piezoelektrisches Modul (18) mit einem piezoelektrischen Element (23), das es ermöglicht, das bei der Verbrennung erzeugte Wasser in kalten Wasserdampf umzuwandeln, und mit mindestens einer Öffnung (22), die es ermöglicht, den kalten Wasserdampf an die Umgebung abzugeben.

4. Ein Luftreiniger (1), wie in einem der vorherigen Ansprüchen aufgeführt, **ist dadurch gekennzeichnet, dass** ein thermoelektrisches Modul (20) mit Hilfe des in der Brennkammer (17) entstehenden heißen Wasserdampfes elektrische Energie erzeugt.

5. Ein Luftreiniger (1), wie in einem der vorherigen Ansprüchen aufgeführt, **ist dadurch gekennzeichnet, dass** die Brennkammer (17) einen Sensor (19) aufweist, der den Wasserstoffgehalt erfasst.

6. Eine Klimaanlage umfasst einen Luftreiniger (1) nach einem der vorherigen Ansprüche.

## Revendications

1. Un purificateur d'air (1) destiné à purifier l'air dans un environnement **comprenant** un corps (2) ; une ouverture d'entrée d'air (3) disposée sur le corps (2) pour recevoir l'air de l'environnement ; un ventilateur (4) qui permet à l'air reçu d'être dirigé à travers l'ouverture d'entrée d'air (3) dans le corps (2) ; une ouverture de sortie d'air (2) qui permet à l'air purifié dans le corps (2) d'être libéré hors du corps (2) ; une unité d'absorption de CO₂ (6) dans laquelle l'air reçu est aspiré ; une unité de dosage de base (8) et une unité de dosage d'acide (7), toutes deux étant reliées à l'unité d'absorption de CO₂ (6) et fournissant respectivement une solution basique et une solution acide dans l'unité d'absorption de CO₂ (6) ; un tube de CO₂ (10) qui permet au CO₂ retenu dans l'unité d'absorption de CO₂ (6) d'être évacué hors de l'environnement ; une unité d'électrodialyse (9) dans laquelle le sel créé dans l'unité d'absorption de CO₂ (6) est acheminé et transformé en acide et en base, et dans laquelle de l'hydrogène gazeux est libéré ; un condenseur (12) qui condense l'humidité présente dans l'environnement en eau ; et une unité d'électrolyse de l'eau (11) qui est connectée au condenseur (12) de sorte que l'eau condensée soit reçue du condenseur (12) par l'unité d'électrolyse (11), dans laquelle l'eau reçue du condenseur (12) est électrolysée, l'unité d'électrolyse (11) comprenant un réceptacle d'anode (13) où l'O₂ est libéré et un récipient cathodique (14) où l'H₂ est libéré, **caractérisé par** une chambre de combustion (17) qui est reliée à l'unité d'électrolyse de l'eau (11) et à l'unité d'électrodialyse (9) pour recevoir l'hydrogène gazeux provenant de l'unité d'électrolyse de l'eau (11) et de l'unité d'électrodialyse (9), et dans laquelle l'hydrogène généré au cours des processus d'électrolyse de l'eau et d'électrodialyse est brûlé.

2. Un purificateur d'air (1) selon la revendication 1, **caractérisé par** la chambre de combustion (17) qui comporte une conduite d'alimentation en O₂ (15) par laquelle l'oxygène reçu du réceptacle d'anode (13) est transféré à la chambre de combustion (17), une conduite d'alimentation en H₂ (16) par laquelle l'hydrogène reçu du récipient cathodique (14) et de l'unité d'électrodialyse (9) est transféré à la chambre de combustion (17), et un générateur d'étincelles (21).

3. Un purificateur d'air (1) selon la revendication 1 ou 2, **caractérisé par** un module piézoélectrique (18) qui comporte un élément piézoélectrique (23) permettant de transformer l'eau générée lors de la combustion en vapeur d'eau froide et au moins une ouverture (22) permettant de libérer la vapeur d'eau froide dans l'environnement.

4. Un purificateur d'air (1) selon l'une quelconque des revendications précédentes, **caractérisé par** un module thermoélectrique (20) qui génère de l'énergie électrique au moyen de la vapeur d'eau chaude créée dans la chambre de combustion (17).

5. Un purificateur d'air (1) selon l'une quelconque des revendications précédentes, **caractérisé par** la chambre de combustion (17) qui comporte un capteur (19) détectant le niveau d'hydrogène.

6. Un climatiseur comprenant un purificateur d'air (1) selon l'une quelconque des revendications précédentes.
